# EUROPEAN PATENT SPECIFICATION

(11) **EP 4 607 052 B1**
(45) Date of publication and mention of the grant of the patent: **22.04.2026**
(21) Application number: 24158904.3
(22) Date of filing: 21.02.2024
(51) Int. Cl.: F16D 43/16

(54) **CLUTCH ASSEMBLY FOR DRIVINGLY CONNECTING A FIRST SHAFT AND A SECOND SHAFT, AXLE ASSEMBLY FOR A VEHICLE, USE, VEHICLE, AND METHOD**
KUPPLUNGSANORDNUNG ZUR ANTRIEBSANBINDUNG EINER ERSTEN WELLE UND EINER ZWEITEN WELLE, ACHSANORDNUNG FÜR EIN FAHRZEUG, VERWENDUNG, FAHRZEUG UND VERFAHREN
ENSEMBLE EMBRAYAGE POUR RELIER PAR ENTRAÎNEMENT UN PREMIER ARBRE ET UN SECOND ARBRE, ENSEMBLE ESSIEU POUR UN VÉHICULE, UTILISATION, VÉHICULE ET PROCÉDÉ

(43) Date of publication of application: 27.08.2025
(73) Proprietor: Volvo Car Corporation, 405 31 Göteborg (SE)
(72) Inventor: SILVA PEREIRA, Luiz Filipe, 40531 Göteborg (SE)
(74) Representative: Kransell & Wennborg KB

(56) References cited:
- CN-A- 117 028 445
- JP-U- S4 887 435
- US-A1- 2018 231 063

## Description

### TECHNICAL FIELD

The present invention relates to a clutch assembly for drivingly connecting a first shaft and a second shaft.

Moreover, the present invention is directed to an axle assembly for a vehicle.

Additionally, the present invention relates to a use of a centrifugal clutch.

Furthermore, the present invention is directed to a vehicle comprising a clutch assembly or an axle assembly.

Also, the present invention relates to a method for operating a clutch assembly.

### BACKGROUND ART

Nowadays, vehicles, especially electric vehicles that comprise all-wheel drive systems often include an electric front axle drive and an electric rear axle drive. Each axle drive may comprise an individual electric machine. However, in many driving situations, only one of the axle drives is powered while the other one is not powered. This is done in order to increase the overall efficiency of the vehicle. In this context, CN 117 028 445 A shows a clutch assembly according to the preamble of claim 1. Further clutch assemblies are known from US 2018/231063 A1 and JP S48 87435 U.

### SUMMARY

It is an objective of the present invention to further improve the overall efficiency of vehicles.

The problem is at least partially solved or alleviated by the subject matter of the independent claims of the present invention, wherein further examples are incorporated in the dependent claims.

According to a first aspect, there is provided a clutch assembly for drivingly connecting a first shaft and a second shaft. The clutch assembly comprises a first connection body rotatable around an axis and drivingly connectable to the first shaft. Further, the clutch assembly comprises a second connection body rotatable around the axis and drivingly connectable to the second shaft. At least one engagement element is supported on the first connection body in a radially movable manner such that the at least one engagement element can assume a retracted radial position and, subject to a centrifugal force, an extended radial position. At least one depression is provided on the second connection body and is configured to receive at least a portion of the at least one engagement element if the at least one engagement element is in the extended radial position such that the first connection body and the second connection body are drivingly coupled. The clutch assembly further comprises a locking mechanism configured to selectively lock the at least one engagement element in the retracted radial position. Such a clutch assembly may be summarized as a centrifugal clutch comprising a locking mechanism configured to lock the centrifugal clutch in a disengaged or open state. Thus, such a clutch assembly can be reliably held in the open or disengaged state using the locking mechanism. Alternatively, also using the locking mechanism, an operation of the clutch may be permitted in which the state of the clutch, i.e. the fact whether the clutch is open or closed, i.e. engaged or disengaged, depends on a centrifugal force acting on the at least one engagement element. In more detail, the extended radial position is assumed, when a centrifugal force acts on the at least one engagement element and the centrifugal force is large enough to make the at least one engagement element move into the at least one depression. Since the centrifugal force is dependent on a rotational speed of the first connection body, the position of the at least one engagement element also depends on the rotational speed of the first connection body. The engagement element being in a retracted radial position has the effect that the first connection body is drivingly disconnected from the second connection body. Thus, the clutch assembly according to the present invention allows to reliably provide a rotational connection or a rotational disconnection.

If the at least one engagement element is at least partially received in the at least one depression, the first connection body and the second connection body are drivingly connected via positive locking. Thus, more generally speaking, the clutch assembly of the present invention relies on positive locking.

Therefore, the road wheel is drivingly disconnected from the electric machine. This means that the second shaft may rotate without causing the first shaft to rotate and vice versa. In other words, the road wheel may rotate without causing a movement in the electric machine and vice versa. This has the effect that permanent magnets being located in the electric machine may not move. Therefore, no magnetic friction caused by moving permanent magnets in the electric machine occur. Thus, vehicle efficiency losses caused by magnetic friction in the electric machine can be reduced. Additionally, mechanical losses, e.g. losses resulting from splashing of oil or another lubricant or coolant, may be reduced.

The clutch assembly of the present invention may be drivingly arranged between an electric machine and a road wheel of a vehicle, wherein the electric machine may be configured to power the road wheel. Thus, the first shaft may correspond to a shaft that is mechanically connected to the electric machine and the second shaft may correspond to a shaft that is mechanically connected to the road wheel. In summary, the first shaft and the second shaft may be drivingly connected via the clutch assembly. In such an application, the electric machine and the road wheel may be reliably disconnected using the clutch assembly. This reduces losses, i.e. enhances efficiency, since in a case in which the electric machine does not power the road wheel, components of the electric machines are not entrained by a rotatory movement of the road wheel. This may be the case in an all-wheel drive vehicle, wherein one axle drive is temporarily not used for powering the vehicle. The same applies to magnetic losses.

According to an example, the at least one engagement element is biased towards the retracted radial position. In this context, biased towards the retracted radial position may be achieved by different techniques holding the at least one engagement towards the retracted radial position. In an example, a spring may be used to generate a preload to bias the at least one engagement element towards the retracted radial position. Alternatively, an elastic element, such as an elastomeric element may be used for the same purpose. The functionality of the clutch assembly, i.e. the switching characteristic describing a transition from the engaged or closed state into the disengaged or open state and vice versa, may be tuned by selecting an appropriate biasing element. Thus, springs or elastomeric elements generating different forces may be used to define a rotational speed threshold at which the at least one engagement element should moves from the retracted radial position into the extended radial position. Below this rotational speed threshold, the engagement element is reliably held in the retracted radial position by the biasing means.

It is noted that the switching characteristic of the clutch assembly describing the transition from the engaged or closed state into the disengaged or open state and vice versa, may also be tuned by modifying a mass of the at least one engagement element. As a general rule, the heavier the at least one engagement element, the higher the rotational speed needs to be in order to make the at least one engagement element move into the extended radial position.

According to the invention, the locking mechanism comprises an actuator configured for selectively assuming a locking position and a release position. The locking position is associated with the at least one engagement element locked in the retracted radial position. The release position is associated with the at least one engagement element being radially movable. In other words, if the actuator is in the release position, the at least one engagement element is released such that it can move radially depending on the centrifugal force acting on it, and optionally depending on a biasing force. Altogether, using the actuator, the functional behavior of the clutch assembly may be reliably chosen.

In an example, the actuator may be a solenoid. Such an actuator may be operated in a reliable manner, is compact and energy-efficient.

According to an example, the locking mechanism comprises a ring-shaped locking element having a holding feature. The holding feature radially extends over at least a portion of the at least one engagement element in order to lock the at least one engagement element in the retracted radial position. Thus, the at least one engagement element may be reliably locked in the retracted position.

In an example, the holding feature does not extend radially over the at least one engagement element in a release position. Thus, the at least one engagement element may move radially without being hindered by the locking element.

In an example, the holding feature may be configured to force the at least one engagement element into the retracted radial position. This means that the actuator may be moved into the locking position while the at least one engagement element is in the radially extended position and the at least one engagement element is moved into the radially retracted position by the holding feature. This has the effect that the first connection body and the second connection body may be disconnected even in case centrifugal forces act on the at least one engagement element such that, without the holding feature, it would assume the extended radial position.

According to an example, the locking element is axially movable using the actuator. Such a movability allows to reliably hold the at least one engagement element in the retracted radial position if the actuator is in the locking position. At the same time, a radial movability of the at least one engagement element may be reliably permitted if the actuator is in the release position. In simplified words, due to the axial movability of the locking element, the locking element may be reliably moved out of the way of the at least one engagement element and may also be reliably moved into the way of the at least one engagement element in order to block its movement.

According to an example, the holding feature comprises an inclined or curved portion when regarded along a circumferential direction. In this context, inclined may be understood as neither purely radial nor purely axial when regarded along a circumferential direction. The inclined or curved portion may be configured to interact with the at least one engagement element. Therefore, the interaction of the holding feature and the at least one engagement element may be continuously built up or reduced. This is advantageous when moving the at least one engagement element from the extended radial position into the retracted radial position and vice versa. Thus, in both cases, the at least one engagement element may be moved in a smooth, continuous and reliable manner. Thus, the first connection body and the second connection body may be disconnected in a smooth and reliable manner. Further, this disconnection may be achieved even in case centrifugal forces act on the at least one engagement element.

According to an example, the at least one engagement element comprises an actuation portion. The actuation portion is inclined or rounded when regarded along a circumferential direction. In this context, inclined may be understood as neither purely radial nor purely axial when regarded along a circumferential direction. The inclined or rounded portion may be configured to interact with the at least one holding feature. Therefore, the interaction of the holding feature and the at least one engagement element may be continuously built up or reduced. This is advantageous when moving the at least one engagement element from the extended radial position into the retracted radial position and vice versa. In case the locking element is selectively axially moved by the actuator so that the locking element contacts the at least one engagement element, the actuation portion may lead to a reliable engagement of the locking element with the at least one engagement element. This is because an inclined or rounded actuation portion facilitates contacting so that the locking element forces the at least one engagement to assume the retracted radial position.

According to an example, the second connection body comprises a circular groove. A depth of the circular groove is oriented parallel to the axis. A width of the circular groove is oriented parallel to a radial direction. The depression is provided on a radially outer wall of the groove. In other words, the circular groove is provided on an axial front face of the second connection body. In such a configuration, the groove is easily accessible by the engagement element. Moreover, due to such a configuration, the clutch assembly may be built in a compact manner, thus, reducing space consumption of the clutch assembly. This may lead to a smaller clutch assembly in size, i.e. making it not need large spaces when being implemented in a vehicle.

According to an example, the at least one engagement element is at least partially located in the groove. In case the at least one engagement element is in the retracted radial position, the at least one engagement element is at least partially located in the groove without extending into the depression. When the at least one engagement element is in the extended radial position, the at least one engagement element is at least partially located in the groove but also at least partially extends into the depression. In such a configuration, the at least one engagement element is able to reliably move in and out of the depression. Moreover, this has the effect that the clutch assembly may be built in a compact manner, thus, reducing space consumption of the clutch assembly. This may lead to a smaller clutch assembly in size, making it not need a large space when being implemented into a vehicle.

According to an example, the clutch comprises a plurality of engagement elements and a plurality of depressions. Each of the engagement elements is supported on the first connection body in a radially movable manner such that each engagement element can assume a retracted radial position and, subject to a centrifugal force, an extended radial position. Each depression is provided on the second connection body and configured to receive at least a portion of one of the engagement elements if the one of the engagement elements is in the extended radial position such that the first connection body and the second connection body are drivingly coupled. A plurality may be understood as at least two. Thus, a plurality of engagement elements and a plurality of depressions may be understood as at least two engagement elements and at least two depressions. In this context, the number of engagement elements and the number of depressions may be equal. Thus, all engagement elements may at least partially extend into a depression at the same time. This means that more than one engagement element may be used to connect the first connection body with the second connection body. This has the effect that the connection safety and/or reliability between the first connection body and the second connection body may be enhanced. Further, such a connection is able to transfer comparatively high torques or forces.

According to an example, the engagement elements are evenly distributed along a circumferential direction of the first connection body. Additionally or alternatively, the depressions are evenly distributed along a circumferential direction of the second connection body. Thus, the first connection body and/or the second connection body are circumferentially balanced as far as the engagement elements and/or the depressions are concerned. Moreover, forces and/or torques transferred between the first connection body and/or the second connection body may be evenly distributed along the circumferential direction of the first connection body and/or along the circumferential direction of the second connection body. In other words, the first connection body and /the second connection body are subject to forces and/or torques in a rather uniform or homogeneous manner. This enhances reliability and lifetime of the clutch assembly.

In an example, the clutch assembly further comprises at least two sealing means. The at least two sealing means are configured to prevent dust or alike from entering into the clutch assembly. Dust or alike may lead to a clutch assembly being subject to increased wear. Therefore, the at least two sealing means may have the effect that the overall clutch assembly lifetime can be enhanced.

According to a second aspect, there is provided an axle assembly for a vehicle. The axle assembly comprises:
- a clutch assembly according to the present invention,
- an electric machine, and
- a flange for drivingly coupling a wheel or a drive shaft for a wheel.

The electric machine is drivingly coupled to the flange via the clutch assembly. The electric machine may comprise a rotor and a stator. The rotor may be drivingly coupled to the flange via the clutch assembly. Thus, when the wheel or the drive shaft for a wheel is rotated, the clutch assembly may connect or disconnect the electric machine from the drive shaft. This has the effect that the rotor being located in the stator may not move when the first shaft is disconnected from the second shaft, even though the flange or the drive shaft is rotating. Therefore, mechanical and magnetic losses caused by moving the rotor in the stator can be reduced. In other words, efficiency is enhanced. This may be the useful in an all-wheel drive vehicle, wherein one axle drive is temporarily not used for powering the vehicle.

According to a third aspect, there is provided a use of a centrifugal clutch for coupling an electric machine to a flange for drivingly coupling a wheel or to a drive shaft for a wheel. The centrifugal clutch may be a clutch assembly according to the present invention. Using the centrifugal clutch, the electric machine and the flange or drive shaft may be selectively coupled or uncoupled. In an example, the electric machine and the flange or drive shaft are uncoupled, using the centrifugal clutch, if the electric machine is not used for driving the flange or drive shaft. The electric machine and the flange or drive shaft are coupled, using the centrifugal clutch, if the electric machine shall power the flange or drive shaft. In this context, the centrifugal clutch is a structurally simple and reliable part. In particular, the centrifugal clutch does not need a specific actuation but rather changes its state, e.g. from open to closed or vice versa, depending on centrifugal forces which are a function of a rotational speed. Thus, using the centrifugal clutch, a closed state of the clutch may be achieved if the electric machine turns at or above a predefined speed threshold. Below this predefined speed threshold, the centrifugal clutch may be open. This is very simple and efficient. In case the centrifugal clutch is open, losses associated with the electric machine may be reduced.

According to a fourth aspect, there is provided a vehicle comprising a clutch assembly according to the present invention or an axle assembly according to the present invention. Thus, mechanical or magnetic losses caused by an electric machine currently not used for driving the vehicle can be reduced.

According to a fifth aspect, there is provided a method for operating a clutch assembly according to the present invention. The method comprises:
- drivingly coupling the first connection body and the second connection body, if a rotational speed of the first connection body equals or exceeds a predefined threshold rotational speed, or
- drivingly decoupling the first connection body and the second connection body, if the rotational speed of the first connection body is lower than the predefined threshold rotational speed and/or if the at least one engagement element is locked in the retracted radial position.
A rotational speed may be understood as the speed at which the first connection body rotates around the axis. A threshold rotational speed may be understood as a predefined speed at which the first connection body rotates around the axis that corresponds to a threshold value. Thus, the threshold rotational speed may be seen as a predefined value of the rotational speed. In case the rotational speed of the first connection body equals or exceeds the predefined threshold rotational speed, the first connection body and the second connection body may be drivingly coupled. In case the rotational speed of the first connection body is lower than the predefined threshold rotational speed, the first connection body and the second connection body may be drivingly decoupled. Additionally or alternatively, the first connection body and the second connection body may be drivingly decoupled, if the at least one engagement element is locked in the retracted radial position. To this end, the locking mechanism may be used. This method is comparatively simple and reliable. Due to the fact that the clutch assembly according to the present invention is used, it does not need any external actuation.

The method of the present invention may be used in a case in which the clutch assembly is drivingly arranged between an electric machine and a road wheel of a vehicle, wherein the electric machine may be configured to power the road wheel. Thus, the first shaft may correspond to a shaft that is mechanically connected to the electric machine and the second shaft may correspond to a shaft that is mechanically connected to the road wheel. In summary, the first shaft and the second shaft may be drivingly connected via the clutch assembly. In such an application, the electric machine and the road wheel may be reliably disconnected using the clutch assembly and the present method. This reduces losses, i.e. enhances efficiency, since in a case in which the electric machine does not power the road wheel, components of the electric machines are not entrained by a rotatory movement of the road wheel. This may be the case in an all-wheel drive vehicle, wherein one axle drive is temporarily not used for powering the vehicle. The same applies to magnetic losses.

It should be noted that the above examples may be combined with each other irrespective of the aspect involved.

These and other aspects of the present invention will become apparent from and elucidated with reference to the examples described hereinafter.

### BRIEF DESCRIPTION OF DRAWINGS

Examples of the invention will be described in the following with reference to the following drawings.
- Figure 1: shows a vehicle according to the present invention comprising an axle assembly according to the present invention and a clutch assembly according to the present invention, wherein the clutch assembly may be operated using a method according to the present invention,
- Figure 2: shows a more detailed representation of the clutch assembly of the vehicle of Figure 1,
- Figure 3: shows a sectional view of the clutch assembly of Figure 2 in sectional plane III of Figure 2,
- Figure 4: shows a separate representation of the first connection body and further elements of the clutch assembly of Figures 2 and 3,
- Figure 5: shows a representation of the second connection body of the clutch assembly of Figures 2 and 3,
- Figure 6a: shows a detail of the clutch assembly of Figures 2 and 3, wherein an engagement element is in a retracted radial position and a locking element in a locking position,
- Figure 6b: shows a detail of the clutch assembly of Figures 2 and 3, wherein the engagement element is in the retracted radial position and the locking element in the release position,
- Figure 6c: shows a detail of the clutch assembly of Figures 2 and 3, wherein the engagement element in the extended radial position and the locking element in the release position, and
- Figure 7: illustrates steps of the method according to the present invention for operating a clutch assembly.

### DETAILED DESCRIPTION

The Figures are merely schematic representations and serve only to illustrate examples of the invention. Identical or equivalent elements are in principle provided with the same reference signs.

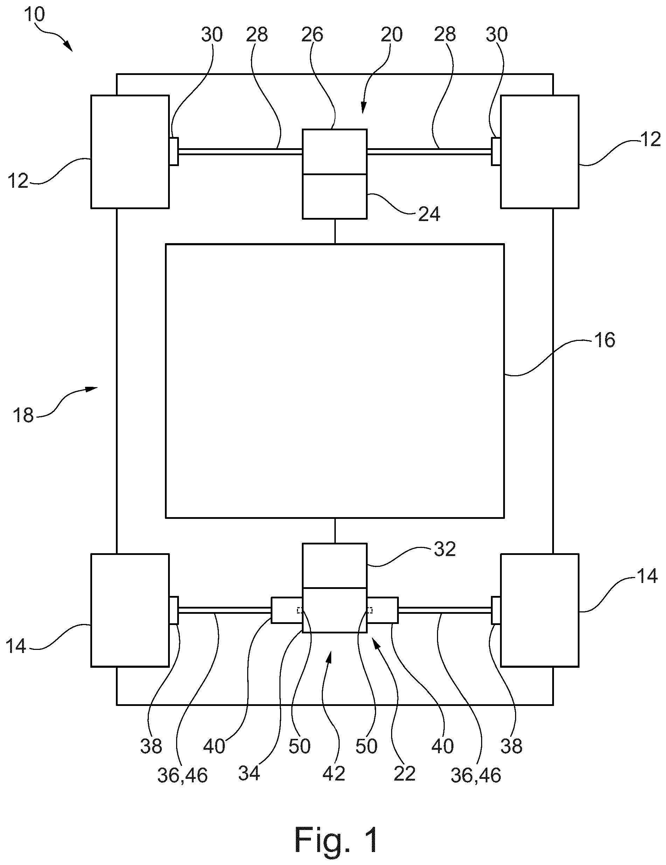

Figure 1 shows a vehicle 10 comprising two front wheels 12, two rear wheels 14, a traction battery 16 as a power source, and an all-wheel drive system 18.

The all-wheel drive system 18 comprises a front axle system 20 and a rear axle system 22.

The front axle system 20 comprises a front electric machine 24 that is powered by the traction battery 16, a front differential gear 26, two front driving shafts 28, and two front flanges 30.

The front electric machine 24 is drivingly coupled to the front differential gear 26. The front differential gear 26 is drivingly coupled to each of the two front driving shafts 28. Each of the two front driving shafts 28 is mechanically coupled to one of the two front flanges 30 so that each of the two front wheels 12 is drivingly coupled to the front differential gear 26.

The rear axle system 22 comprises a rear electric machine 32 that is powered by the traction battery 16, a rear differential gear 34, two rear driving shafts 36, two rear flanges 38, and two clutch assemblies 40. The rear electric machine 32, the clutch assemblies 40, and the two rear flanges 38 formed as an axle assembly 42.

The rear electric machine 32 is drivingly coupled to the rear differential gear 34. The rear differential gear 34 is drivingly coupled to each of the two clutch assemblies 40. Each of the two clutch assemblies 40 is drivingly coupled to one of the two rear driving shafts 36. Each of the two rear driving shafts 36 is mechanically coupled to one of the two rear flanges 38 so that each of the two rear wheels 14 is drivingly coupled to the rear differential gear 34 via one of the clutch assemblies 40.

In the present example, the vehicle 10 can be operated in a two-wheel drive mode or in a four-wheel drive mode. The two-wheel drive mode is configured as a standard drive mode. In more detail, when the vehicle 10 is in the standard drive mode, the front axle system 20 is powered by the traction battery 16 so that the front axle system 20 powers the two front wheels 12. The rear axle system 22 is not powered and, thus, the rear wheels 14 are not driven.

When the vehicle 10 is in the four-wheel drive mode, the front axle system 20 and the rear axle system 22 are powered by the traction battery 16 so that the front axle system 20 drives the two front wheels 12 and the rear axle system 22 drives the two rear wheels 14.

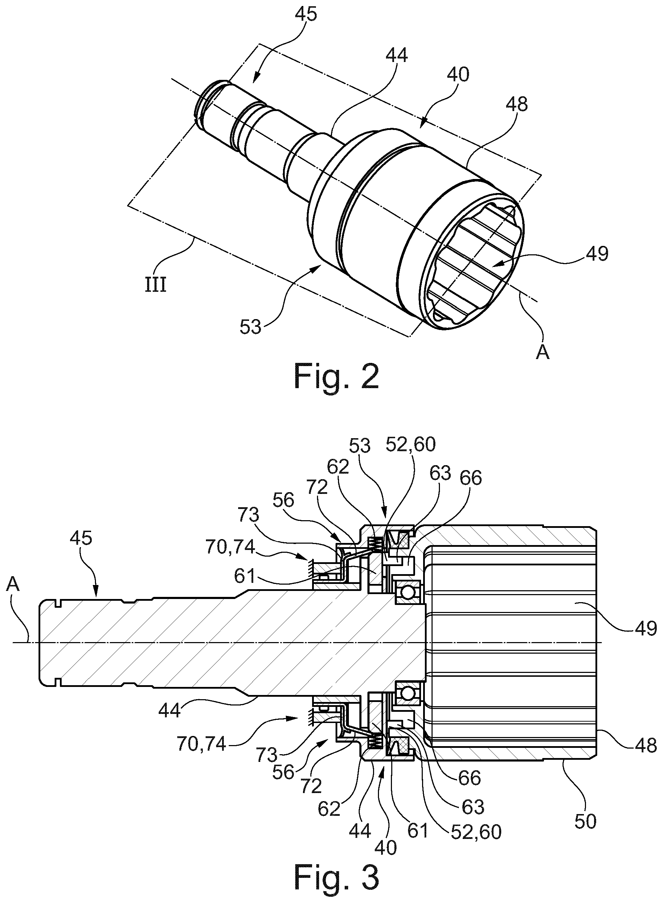

In the following, the clutch assembly 40 will be explained in more detail (see Figure 2 and Figure 3).

The clutch assembly 40 comprises a first connection body 44 drivingly connected to a first shaft 46. In the present example, the first shaft 46 corresponds to the rear driving shaft 36 represented on the left side in Figure 1 if the clutch assembly 40 represented on the left side in Figure 1 is considered. The first shaft 46 corresponds to the rear driving shaft 36 represented on the right side in Figure 1 if the clutch assembly 40 represented on the right side in Figure 1 is considered. In the following, the more general term first shaft 46 will be used.

In order to connect the first connection body 44 to the first shaft 46, the first connection body 44 comprises a connection portion 45 which may comprise an outer toothing on its outer circumference. The first shaft may be equipped with a corresponding inner toothing which may be engaged by the outer toothing of the connection portion 45.

The clutch assembly 40 also comprises a second connection body 48 drivingly connected to a second shaft 50. In the present example, the second shaft 50 corresponds to an output shaft of the rear differential gear 34 which is schematically represented on the left side in Figure 1 if the clutch assembly 40 represented on the left side in Figure 1 is considered. The second shaft 50 corresponds to an output shaft of the rear differential gear 34 which his schematically represented on the right side in Figure 1 if the clutch assembly 40 represented on the right side in Figure 1 is considered. In the following, the more general term second shaft 50 will be used.

In order to connect the second connection body 48 to the second shaft 50, the second connection body 48 comprises a connection portion 49 which may comprise an inner toothing on an inner circumference of the second connection body 48. The second shaft 50 may be equipped with a corresponding outer toothing which may engaged the inner toothing of the connection portion 49.

The clutch assembly 40 also comprises six engagement elements 52, six depressions 54, and a locking mechanism 56 as will be explained in more detail in the following.

The first connection body 44 and the second connection body 48 are rotatable around an axis A.

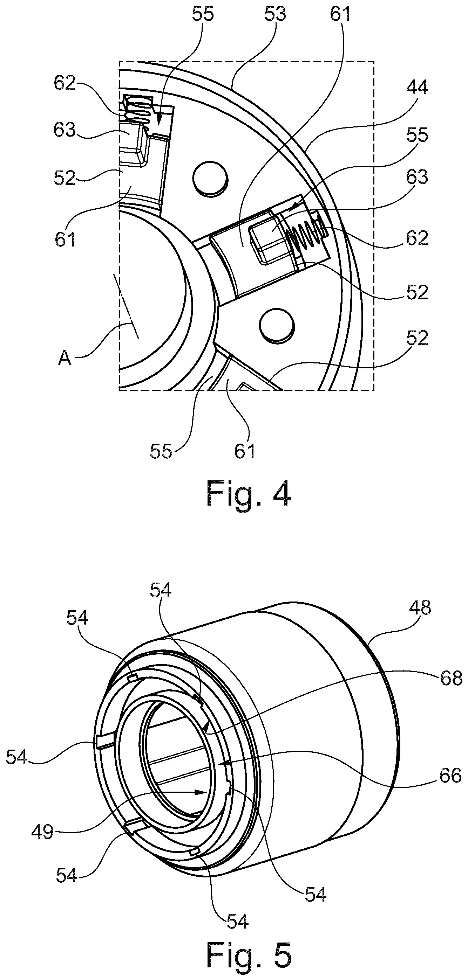

The six engagement elements 52 are supported on the first connection body 44 in a radially movable manner (see Figure 4). More precisely, the first connection body 44 comprises a disk-shaped portion 53. The disk-shaped portion 53 comprises a total of six guiding grooves 55 which extend radially with respect to the axis A. In each of the grooves 55, one of the six engagement elements 52 is arranged.

The six guiding grooves 55 and the six engagement elements 52 are evenly distributed along a circumferential direction of the first connection body 44. This means that an angular distance between neighboring guiding grooves is constant for the entire first connection body 44.

Each of the engagement elements 52 is movable along the associated guiding groove 55. Thus, each of the engagement elements 52 is radially movable.

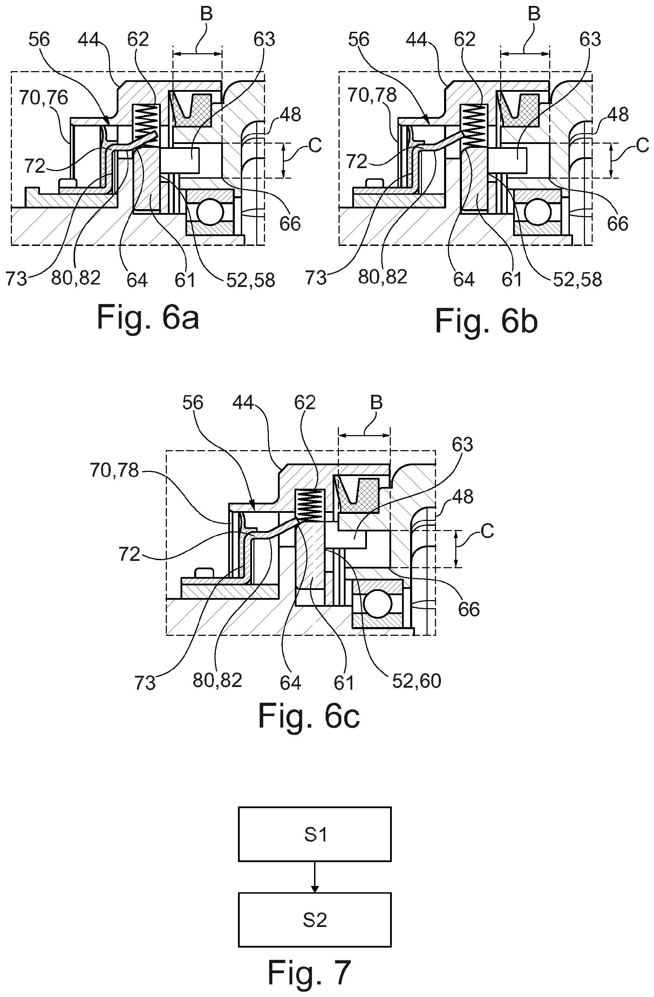

This means that each of the engagement elements 52 can assume a retracted radial position 58 and, subject to a centrifugal force, an extended radial position 60 by moving along the associated guiding groove 55 (see for example Figures 6a and 6c).

In the present example, each of the engagement elements 52 is biased towards the retracted radial position 58 via a spring 62 (see Figure 4).

Each of the engagement elements 52 comprises a guiding portion 61 which is essentially block-shaped and which is located within the associated guiding groove 55. In the present example, the guiding portion 61 is completely received inside the associated guiding groove 55. The guiding portion 61 serves for radially guiding the engagement element 52 within the guiding groove 55.

Additionally, each of the engagement elements 52 comprises a protruding portion 63. The protruding portion 63 is also essentially block-shaped. Moreover, the protruding portion extends from the guiding portion 61 in an axial direction. This means that the protruding portion 63 sticks out from the associated guiding groove 55 along the axial direction. The protruding portion 63 serves for engaging an associated depression 54 as will be explained in more detail further below.

Further, each of the engagement elements 52 comprises an actuation portion 64. The actuation portion 64 is formed by a section of the guiding portion 61.

The actuation portion 64 is rounded when regarded along the circumferential direction of the first connection body 44.

The second connection body 48 is essentially shaped as a circular cylinder (cf. Figure 3).

On an axial end face of the second connection body 48, a circular groove 66 is provided. This axial end face and, thus, also the groove is directed towards the first connection body 44.

A depth B of the circular groove 66 is oriented parallel to the axis A. A width C of the circular groove 66 is oriented parallel to a radial direction (cf. Figures 6a to 6c).

The six depressions 54 are arranged on a radially outer wall 68 of the groove 66 of the second connection body 48.

The depressions 54 are evenly distributed along a circumference of the groove 66.

Moreover, the depressions essentially have a rectangular cross section. Thus, the depressions may as well be designated as grooves.

In an assembled state of the clutch assembly 40, the engagement elements 52 are at least partially located in the groove 66. More precisely, the protruding portions 63 of the engagements 52 extend into the groove 66 (cf. Figure 3 and Figures 6a to 6c).

Moreover, each depression 54 is configured, i.e. sized and positioned, to receive a portion of any of the six engagement elements 52, if the respective engagement element 52 is in the extended radial position 60 such that the first connection body 44 and the second connection body 48 are drivingly coupled. It is noted that each of the depressions 54 may receive a portion of each of the engagement elements 52, wherein at one point in time, each depression 54 may only receive a portion of one engagement element 52.

The locking mechanism 56 is configured to selectively lock the six engagement elements 52 in the retracted radial position 58 and comprises an actuator 70 and a ring-shaped locking element 72.

The locking mechanism 56 is rotatorily fixed with respect to the first connection body 44. This means that components of the locking mechanism 56 may not turn with respect to the first connection body 44.

In the present example, the actuator 70 is a solenoid 74 operational along a direction that is oriented in parallel to the axis A. The actuator 70 is represented schematically in Figure 3.

The actuator 70 is configured for selectively assuming a locking position 76 and a release position 78. The locking position 76 is associated with the six engagement elements 52 locked in the retracted radial position 58. In contrast thereto, the release position 78 is associated with the six engagement elements 52 released, i.e. the six engagement elements 52 being radially movable.

The locking element 72 is axially movable using the actuator 70.

The locking element 72 has a ring-shaped base body 73 and a total of six holding features 80.

The holding features 80 extend from the ring-shaped base body 73.

Moreover, each of the holding features 80 comprises an inclined portion when regarded along the circumferential direction of the first connection body 44.

Further, each of the holding features 80 radially extends over a portion one of the six engagement elements 52 in order to be able to lock the six engagement elements 52 in the retracted radial position 58.

It is noted that in the example shown in the Figures, a portion of the holding features 80 radially extends over one of the six engagement elements 52 irrespective of the axial position of the locking element 72. However, strictly speaking, this is only necessary in case the engagement elements 52 shall be locked in the retracted radial position.

In the following, a method for operating the clutch assembly 40 will be explained in more detail in connection with Figures 6a, 6b, 6c, and 7.

In a first step S1, the first connection body 44 and the second connection body 48 are drivingly coupled, if a rotational speed of the first connection body 44 equals or exceeds a predefined threshold rotational speed.

Thus, in this case, all the engagement elements 52 are in the extended radial position and least partially located in a respectively associated depression 54. The engagement elements 52 move into this position due to a centrifugal force acting on the engagement elements 52. The locking mechanism 56 allows for this movement, i.e. is in the release position 78 (cf. Figure 6c).

If the clutch assembly 40 is used in a vehicle, the first step of the method may be used in a driving situation in which, in the present example, the rear wheels 14 shall be driven by the rear axle system 22, e.g. in an all-wheel driving mode. The centrifugal force results from an operation of the rear electric machine 32.

In a second step S2, the first connection body 44 and the second connection body 48 are drivingly decoupled. This is the case under two alternative conditions, wherein the conditions may also be fulfilled at the same time.

In a first alternative, the rotational speed of the first connection body 44 is lower than the predefined threshold rotational speed (see Figure 6b). This means that the centrifugal force resulting from the rotation of the rotation of the first connection body 44 is not sufficient for moving the engagement elements 52 out of the retracted radial position. In such a situation the position of the locking mechanism 56 does not matter.

If the clutch assembly 40 is used in a vehicle, this may be the case if the rear electric machine 32 is not operated or only operated at a very low rotational speed, e.g. in a two-wheel drive mode of the vehicle 10.

In a second alternative, the first connection body 44 and the second connection body 48 are also drivingly decoupled. In this alternative, the engagement elements 52 are locked in the retracted radial position 58. Thus, the engagement elements 52 are in the retracted radial position 58 because the locking element 72 is in the locking position 76 (see Figure 6a). Consequently, the engagement elements 52 will stay in the retracted radial position even if the rotational speed of the first connection body 44 equals or exceeds the predefined threshold rotational speed.

If the clutch assembly 40 is used in a vehicle, this may be the useful if a driving connection between the rear electric machine 32 and the rear wheels 14 shall be avoided even if an operation of the rear electric machine 32 cannot be avoided, e.g. in a two-wheel drive mode of the vehicle 10.

It is noted that the engagement elements 52 may also be forced into the retracted radial position using the locking mechanism 56, if the engagement elements 52 are in the extended radial position. To this end, the locking mechanism 56 is transferred from the release position into the locking position. Consequently, the holding features 80 will contact the actuation portions of the associated engagement elements 52, thereby radially pushing the associated engagement elements 52 radially inwards until the first connection body 44 and the second connection body 48 are drivingly decoupled.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: front wheel
- 14: rear wheel
- 16: traction battery
- 18: all-wheel drive system
- 20: front axle system
- 22: rear axle system
- 24: front electric machine
- 26: front differential gear
- 28: front driving shaft
- 30: front flange
- 32: rear electric machine
- 34: rear differential gear
- 36: rear driving shaft
- 38: rear flange
- 40: clutch assembly
- 42: axle assembly
- 44: first connection body
- 45: connection portion of the first connection body
- 46: first shaft
- 48: second connection body
- 49: connection portion of the second connection body
- 50: second shaft
- 52: engagement element
- 53: disk-shaped portion of the first connection body
- 54: depression
- 55: guiding groove
- 56: locking mechanism
- 58: retracted radial position
- 60: extended radial position
- 61: guiding portion of the engagement element
- 62: spring
- 63: protruding portion
- 64: actuation portion
- 66: groove
- 68: radially outer wall
- 70: actuator
- 72: locking element
- 73: base body of the locking element
- 74: solenoid
- 76: locking position
- 78: release position
- 80: holding feature
- 82: inclined portion

- A: axis
- B: depth
- C: width

- S1: first step
- S2: second step

## Claims

1. A clutch assembly (40) for drivingly connecting a first shaft (46) and a second shaft (50), comprising
a first connection body (44) rotatable around an axis (A) and drivingly connectable to the first shaft (46),
a second connection body (48) rotatable around the axis (A) and drivingly connectable to the second shaft (50),
at least one engagement element (52) supported on the first connection body (44) in a radially movable manner such that the at least one engagement element (52) can assume a retracted radial position (58) and, subject to a centrifugal force, an extended radial position (60),
at least one depression (54) provided on the second connection body (48) and configured to receive at least a portion of the at least one engagement element (52) if the at least one engagement element (52) is in the extended radial position (60) such that the first connection body (44) and the second connection body (48) are drivingly coupled, and
a locking mechanism (56) configured to lock the at least one engagement element (52) in the retracted radial position (58),
**characterized in that**
the locking mechanism (56) is configured to selectively lock the at least one engagement element (52) in the retracted radial position (58), and **in that** the locking mechanism (56) comprises an actuator (70) configured for selectively assuming a locking position (76) and a release position (78), wherein the locking position (76) is associated with the at least one engagement element (52) locked in the retracted radial position (58) and wherein the release position (78) is associated with the at least one engagement element (52) being radially movable.

2. The clutch assembly (40) of any one of the preceding claims, wherein the at least one engagement element (52) is biased towards the retracted radial position (58).

3. The clutch assembly (40) of any one of the preceding claims, wherein the locking mechanism (56) comprises a ring-shaped locking element (72) having a holding feature (80), wherein the holding feature (80) radially extends over at least a portion of the at least one engagement element (52) in order to lock the at least one engagement element (52) in the retracted radial position (58).

4. The clutch assembly (40) of claim 3, wherein the locking element (72) is axially movable using the actuator (70).

5. The clutch assembly (40) of claim 3 or 4, wherein the holding feature (80) comprises an inclined or curved portion (82) when regarded along a circumferential direction.

6. The clutch assembly (40) of any one of the preceding claims, wherein the at least one engagement element (52) comprises an actuation portion (64) wherein the actuation portion (64) is inclined or rounded when regarded along a circumferential direction.

7. The clutch assembly (40) of any one of the preceding claims, wherein the second connection body (48) comprises a circular groove (66), wherein a depth (B) of the circular groove (66) is oriented parallel to the axis (A), wherein a width (C) of the circular groove (66) is oriented parallel to a radial direction, and wherein the depression (54) is provided on a radially outer wall (68) of the groove (66).

8. The clutch assembly (40) of claim 7, wherein the at least one engagement element (52) is at least partially located in the groove (66).

9. The clutch assembly (40) of any one of the preceding claims, comprising a plurality of engagement elements (52) and a plurality of depressions (54),
wherein each of the engagement elements (52) is supported on the first connection body (44) in a radially movable manner such that each engagement element (52) can assume a retracted radial position (58) and, subject to a centrifugal force, an extended radial position (60), and
wherein each depression (54) is provided on the second connection body (48) and configured to receive at least a portion of one of the engagement elements (52) if the one of the engagement elements (52) is in the extended radial position (60) such that the first connection body (44) and the second connection body (48) are drivingly coupled.

10. The clutch assembly (40) of claim 9, wherein the engagement elements (52) are evenly distributed along a circumferential direction of the first connection body (44), and/or wherein the depressions (54) are evenly distributed along a circumferential direction of the second connection body (48).

11. An axle assembly (42) for a vehicle (10), comprising
- a clutch assembly (40) of any of the preceding claims,
- an electric machine (32), and
- a flange (38) for drivingly coupling a wheel (14) or a drive shaft (36) for a wheel (14),
wherein the electric machine (32) is drivingly coupled to the flange (38) via the clutch assembly (40).

12. A use of a clutch assembly (40) of any one of claims 1 to 10 for coupling an electric machine (32) to a flange (38) for drivingly coupling a wheel (14) or to a drive shaft (36) for a wheel (14).

13. A vehicle (10) comprising a clutch assembly (40) of any of claims 1 to 11 or an axle assembly (42) of claim 11.

14. A method for operating a clutch assembly (40) of any one of claims 1 to 10, comprising
- drivingly coupling the first connection body (44) and the second connection body (48), if a rotational speed of the first connection body (44) equals or exceeds a predefined threshold rotational speed, or
- drivingly decoupling the first connection body (44) and the second connection body (48), if the rotational speed of the first connection body (44) is lower than the predefined threshold rotational speed and/or if the at least one engagement element (52) is locked in the retracted radial position (58).

## Patentansprüche

1. Kupplungsanordnung (40) zum antriebsmäßigen Verbinden einer ersten Welle (46) und einer zweiten Welle (50), umfassend:
einen ersten Verbindungskörper (44), der um eine Achse (A) drehbar ist und mit der ersten Welle (46) antriebsmäßig verbindbar ist,
einen zweiten Verbindungskörper (48), der um die Achse (A) drehbar ist und mit der zweiten Welle (50) antriebsmäßig verbindbar ist,
mindestens ein Eingriffnahmeelement (52), das an dem ersten Verbindungskörper (44) in einer radial beweglichen Weise so gestützt ist, dass das mindestens eine Eingriffnahmeelement (52) eine zurückgezogene radiale Position (58) und, unter der Einwirkung einer Zentrifugalkraft, eine herausgeschobene radiale Position (60) einnehmen kann,
mindestens eine Vertiefung (54), die an dem zweiten Verbindungskörper (48) bereitgestellt ist und dazu eingerichtet ist, mindestens einen Abschnitt des mindestens einen Eingriffnahmeelements (52) aufzunehmen, wenn sich das mindestens eine Eingriffnahmeelement (52) in der herausgeschobenen radialen Position (60) befindet, dergestalt, dass der erste Verbindungskörper (44) und der zweite Verbindungskörper (48) antriebsmäßig gekoppelt sind, und
einen Verriegelungsmechanismus (56), der dazu eingerichtet ist, das mindestens eine Eingriffnahmeelement (52) in der zurückgezogenen radialen Position (58) zu verriegeln,
**dadurch gekennzeichnet, dass**
der Verriegelungsmechanismus (56) dazu eingerichtet ist, das mindestens eine Eingriffnahmeelement (52) selektiv in der zurückgezogenen radialen Position (58) zu verriegeln, und dadurch, dass der Verriegelungsmechanismus (56) einen Aktuator (70) umfasst, der dazu eingerichtet ist, selektiv eine Verriegelungsposition (76) und eine Freigabeposition (78) einzunehmen, wobei die Verriegelungsposition (76) mit dem mindestens einen in der zurückgezogenen radialen Position (58) verriegelten Eingriffnahmeelement (52) verknüpft ist, und wobei die Freigabeposition (78) mit dem mindestens einen radial beweglichen Eingriffnahmeelement (52) verknüpft ist.

2. Kupplungsanordnung (40) nach einem der vorangehenden Ansprüche, wobei das mindestens eine Eingriffnahmeelement (52) in Richtung der zurückgezogenen radialen Position (58) vorgespannt ist.

3. Kupplungsanordnung (40) nach einem der vorangehenden Ansprüche, wobei der Verriegelungsmechanismus (56) ein ringförmiges Verriegelungselement (72) umfasst, das eine Halteausbildung (80) aufweist, wobei sich die Halteausbildung (80) radial über mindestens einen Abschnitt des mindestens einen Eingriffnahmeelements (52) erstreckt, um das mindestens eine Eingriffnahmeelement (52) in der zurückgezogenen radialen Position (58) zu verriegeln.

4. Kupplungsanordnung (40) nach Anspruch 3, wobei das Verriegelungselement (72) unter Verwendung des Aktuators (70) axial bewegbar ist.

5. Kupplungsanordnung (40) nach Anspruch 3 oder 4, wobei die Halteausbildung (80), mit Blick entlang einer Umfangsrichtung, einen geneigten oder gekrümmten Abschnitt (82) umfasst.

6. Kupplungsanordnung (40) nach einem der vorangehenden Ansprüche, wobei das mindestens eine Eingriffnahmeelement (52) einen Betätigungsabschnitt (64) umfasst, wobei der Betätigungsabschnitt (64) ), mit Blick entlang einer Umfangsrichtung, geneigt oder gerundet ist.

7. Kupplungsanordnung (40) nach einem der vorangehenden Ansprüche, wobei der zweite Verbindungskörper (48) eine kreisförmige Nut (66) umfasst, wobei eine Tiefe (B) der kreisförmigen Nut (66) parallel zu der Achse (A) ausgerichtet ist, wobei eine Breite (C) der kreisförmigen Nut (66) parallel zu einer radialen Richtung ausgerichtet ist, und wobei die Vertiefung (54) an einer radialen äußeren Wand (68) der Nut (66) bereitgestellt ist.

8. Kupplungsanordnung (40) nach Anspruch 7, wobei das mindestens eine Eingriffnahmeelement (52) mindestens teilweise in der Nut (66) angeordnet ist.

9. Kupplungsanordnung (40) nach einem der vorangehenden Ansprüche, umfassend mehrere Eingriffnahmeelemente (52) und mehrere Vertiefungen (54),
wobei jedes der Eingriffnahmeelemente (52) an dem ersten Verbindungskörper (44) in einer radial beweglichen Weise so gestützt ist, dass jedes Eingriffnahmeelement (52) eine zurückgezogene radiale Position (58) und, unter der Einwirkung einer Zentrifugalkraft, eine herausgeschobene radiale Position (60) einnehmen kann, und wobei jede Vertiefung (54) an dem zweiten Verbindungskörper (48) bereitgestellt ist und dazu eingerichtet ist, mindestens einen Abschnitt eines der Eingriffnahmeelemente (52) aufzunehmen, wenn sich das eine der Eingriffnahmeelemente (52) in der herausgeschobenen radialen Position (60) befindet, dergestalt, dass der erste Verbindungskörper (44) und der zweite Verbindungskörper (48) antriebsmäßig gekoppelt sind.

10. Kupplungsanordnung (40) nach Anspruch 9, wobei die Eingriffnahmeelemente (52) gleichmäßig entlang einer Umfangsrichtung des ersten Verbindungskörpers (44) verteilt sind und/oder wobei die Vertiefungen (54) gleichmäßig entlang einer Umfangsrichtung des zweiten Verbindungskörpers (48) verteilt sind.

11. Achsanordnung (42) für ein Fahrzeug (10), umfassend:
- eine Kupplungsanordnung (40) nach einem der vorangehenden Ansprüche,
- eine elektrische Maschine (32) und
- einen Flansch (38) zum antriebsmäßigen Koppeln eines Rades (14) oder einer Antriebswelle (36) für ein Rad (14),
wobei die elektrische Maschine (32) über die Kupplungsanordnung (40) mit dem Flansch (38) antriebsmäßig gekoppelt ist.

12. Verwendung einer Kupplungsanordnung (40) nach einem der Ansprüche 1 bis 10 zum Koppeln einer elektrischen Maschine (32) mit einem Flansch (38) zum antriebsmäßigen Koppeln eines Rades (14) oder mit einer Antriebswelle (36) für ein Rad (14).

13. Fahrzeug (10), umfassend eine Kupplungsanordnung (40) nach einem der Ansprüche 1 bis 11 oder eine Achsanordnung (42) nach Anspruch 11.

14. Verfahren zum Betreiben einer Kupplungsanordnung (40) nach einem der Ansprüche 1 bis 10, umfassend:
- antriebsmäßiges Koppeln des ersten Verbindungskörpers (44) und des zweiten Verbindungskörpers (48), wenn eine Drehzahl des ersten Verbindungskörpers (44) gleich einer vordefinierten Schwellendrehzahl ist oder diese überschreitet, oder
- antriebsmäßiges Entkoppeln des ersten Verbindungskörpers (44) und des zweiten Verbindungskörpers (48), wenn die Drehzahl des ersten Verbindungskörpers (44) niedriger als die vordefinierte Schwellendrehzahl ist und/oder wenn das mindestens eine Eingriffnahmeelement (52) in der zurückgezogenen radialen Position (58) verriegelt ist.

## Revendications

1. Ensemble d'embrayage (40) destiné à relier par entraînement un premier arbre (46) et un second arbre (50), comprenant :
un premier corps de liaison (44) étant rotatif autour d'un axe (A) et pouvant être relié par entraînement au premier arbre (46),
un second corps de liaison (48) étant rotatif autour d'un axe (A) et pouvant être relié par entraînement au second arbre (50),
au moins un élément de mise en prise (52) supporté sur le premier corps de liaison (44) d'une manière radialement mobile de telle sorte que ledit au moins un élément de mise en prise (52) peut prendre une position radiale rétractée (58) et, sous l'action d'une force centrifuge, une position radiale étendue (60),
au moins un creux (54) ménagé sur le second corps de liaison (48) et configuré pour recevoir au moins une partie dudit au moins un élément de mise en prise (52) si ledit au moins un élément de mise en prise (52) est dans la position radiale étendue (60) de telle sorte que le premier corps de liaison (44) et le second corps de liaison (48) sont accouplés par entraînement, et
un mécanisme de verrouillage (56) configuré pour verrouiller ledit au moins un élément de mise en prise (52) dans la position radiale rétractée (58),
**caractérisé en ce que**
le mécanisme de verrouillage (56) est configuré pour verrouiller sélectivement ledit au moins un élément de mise en prise (52) dans la position radiale rétractée (58), et **en ce que** le mécanisme de verrouillage (56) comprend un actionneur (70) configuré pour prendre sélectivement une position de verrouillage (76) et une position de libération (78), dans lequel la position de verrouillage (76) est associée audit au moins un élément de mise en prise (52) verrouillé dans la position radiale rétractée (58) et dans lequel la position de libération (78) est associée audit au moins un élément de mise en prise (52) étant radialement mobile.

2. Ensemble d'embrayage (40) selon l'une quelconque des revendications précédentes, dans lequel ledit au moins un élément de mise en prise (52) est sollicité vers la position radiale rétractée (58).

3. Ensemble d'embrayage (40) selon l'une quelconque des revendications précédentes, dans lequel le mécanisme de verrouillage (56) comprend un élément de verrouillage annulaire (72) ayant une caractéristique de maintien (80), dans lequel la caractéristique de maintien (80) s'étend radialement sur au moins une partie dudit au moins un élément de mise en prise (52) afin de verrouiller ledit au moins un élément de mise en prise (52) dans la position radiale rétractée (58).

4. Ensemble d'embrayage (40) selon la revendication 3, dans lequel l'élément de verrouillage (72) peut être déplacé axialement à l'aide de l'actionneur (70).

5. Ensemble d'embrayage (40) selon la revendication 3 ou 4, dans lequel la caractéristique de maintien (80) comprend une partie inclinée ou incurvée (82) lorsqu'elle est vue le long d'une direction circonférentielle.

6. Ensemble d'embrayage (40) selon l'une quelconque des revendications précédentes, dans lequel ledit au moins un élément de mise en prise (52) comprend une partie d'actionnement (64), dans lequel la partie d'actionnement (64) est inclinée ou arrondie lorsqu'elle est vue le long d'une direction circonférentielle.

7. Ensemble d'embrayage (40) selon l'une quelconque des revendications précédentes, dans lequel le second corps de liaison (48) comprend une gorge circulaire (66), dans lequel une profondeur (B) de la gorge circulaire (66) est orientée parallèlement à l'axe (A), dans lequel une largeur (C) de la gorge circulaire (66) est orientée parallèlement à une direction radiale, et dans lequel le creux (54) est ménagé sur une paroi radialement extérieure (68) de la gorge (66).

8. Ensemble d'embrayage (40) selon la revendication 7, dans lequel ledit au moins un élément de mise en prise (52) est au moins partiellement disposé dans la gorge (66).

9. Ensemble d'embrayage (40) selon l'une quelconque des revendications précédentes, comprenant une pluralité d'éléments de mise en prise (52) et une pluralité de creux (54), dans lequel chacun des éléments de mise en prise (52) est supporté sur le premier corps de liaison (44) d'une manière radialement mobile de telle sorte que chaque élément de mise en prise (52) peut prendre une position radiale rétractée (58) et, sous l'action d'une force centrifuge, une position radiale étendue (60), et
dans lequel chaque creux (54) est ménagé sur le second corps de liaison (48) et configuré pour recevoir au moins une partie d'un des éléments de mise en prise (52) si l'un des éléments de mise en prise (52) est dans la position radiale étendue (60) de telle sorte que le premier corps de liaison (44) et le second corps de liaison (48) sont accouplés par entraînement.

10. Ensemble d'embrayage (40) selon la revendication 9, dans lequel les éléments de mise en prise (52) sont uniformément répartis le long d'une direction circonférentielle du premier corps de liaison (44), et/ou dans lequel les creux (54) sont uniformément répartis le long d'une direction circonférentielle du second corps de liaison (48).

11. Ensemble d'essieu (42) pour un véhicule (10), comprenant
- un ensemble d'embrayage (40) selon l'une quelconque des revendications précédentes,
- une machine électrique (32), et
- un flasque (38) pour accoupler par entraînement une roue (14) ou un arbre d'entraînement (36) pour une roue (14),
dans lequel la machine électrique (32) est accouplée par entraînement au flasque (38) via l'ensemble d'embrayage (40).

12. Utilisation d'un ensemble d'embrayage (40) selon l'une quelconque des revendications 1 à 10 pour accoupler une machine électrique (32) à un flasque (38) pour accoupler par entraînement une roue (14), ou à un arbre d'entraînement (36) pour une roue (14).

13. Véhicule (10) comprenant un ensemble d'embrayage (40) selon l'une quelconque des revendications 1 à 11 ou un ensemble d'essieu (42) selon la revendication 11.

14. Procédé pour faire fonctionner un ensemble d'embrayage (40) selon l'une quelconque des revendications 1 à 10, comprenant de :
- accoupler par entraînement le premier corps de liaison (44) et le second corps de liaison (48), si une vitesse de rotation du premier corps de liaison (44) est égale à une vitesse de rotation de seuil prédéfinie ou dépasse celle-ci, ou
- désaccoupler par entraînement le premier corps de liaison (44) et le second corps de liaison (48), si la vitesse de rotation du premier corps de liaison (44) est inférieure à la vitesse de rotation de seuil prédéfinie et/ou si ledit au moins un élément de mise en prise (52) est verrouillé dans la position radiale rétractée (58).
